# EUROPÄISCHE PATENTSCHRIFT

(11) **EP 4 498 808 B1**
(45) Veröffentlichungstag und Bekanntmachung des Hinweises auf die Patenterteilung: **18.03.2026**
(21) Anmeldenummer: 23712834.3
(22) Anmeldetag: 16.03.2023
(51) Int. Cl.: A01M 7/00

(54) **VERFAHREN ZUM AUSBRINGEN VON SPRITZMITTEL AUF EINE LANDWIRTSCHAFTLICHE NUTZFLAECHE UND LANDWIRTSCHAFTLICHE SPRITZVORRICHTUNG**
METHOD FOR APPLYING SPRAY TO AN AGRICULTURAL AREA AND AGRICULTURAL SPRAYING DEVICE
MÉTHODE D'APPLICATION DE LA PULVÉRISATION SUR UN SOL AGRICOLE ET UN DISPOSITIF DE PULVÉRISATION AGRICOLE

(30) Priorität: 30.03.2022 DE 102022107504
(43) Veröffentlichungstag der Anmeldung: 05.02.2025
(73) Patentinhaber: Amazonen-Werke H. Dreyer SE & Co. KG, 49205 Hasbergen (DE)
(72) Erfinder: WERMELING, Maik, 48432 Rheine (DE)
(86) Internationale Anmeldenummer: PCT/EP2023/056694
(87) Internationale Veröffentlichungsnummer: WO 2023/186554

(56) Entgegenhaltungen:
- EP-A1- 2 227 949
- EP-A1- 3 871 499
- EP-B1- 3 539 376
- US-A1- 2021 219 538

## Beschreibung

Die Erfindung betrifft ein Verfahren zum Ausbringen von Spritzmittel auf eine landwirtschaftliche Nutzfläche gemäß dem Oberbegriff des Patentanspruches 1 und eine landwirtschaftliche Spritzvorrichtung gemäß dem Oberbegriff des Patentanspruches 6.

Zum Ausbringen von Spritzmittel auf landwirtschaftlich genutzten Flächen werden regelmäßig gezogene, getragene und/oder selbstfahrende Spritzvorrichtungen, wie beispielsweise Feldspritzen, eingesetzt. Das Spritzmittel ist dabei je nach Bedarf häufig als flüssiges Düngemittel, Pflanzenschutzmittel, Unkrautvernichtungsmittel, Schädlingsbekämpfungsmittel oder dergl. ausgeführt und wird in der Regel großflächig oder selektiv über eine Vielzahl von Ausbringorganen, insbesondere Spritzdüsen, welche an der Spritzvorrichtung angeordnet sind, ausgebracht bzw. appliziert. An modernen landwirtschaftlichen Spritzvorrichtungen wird das Spritzmittel hierfür mittels Ausbringorganen ausgebracht, welche jeweils dazu eingerichtet sind, eine, vorzugsweise bedarfsgerechte und/oder ortspezifische, Ausbringmenge des Spritzmittels anhand von an den Ausbringorganen einstellbaren Öffnungszeiten, insbesondere einer Impulsdauer bzw. einem Duty-Cycle, einzustellen.

Um das Spritzmittel hierfür bedarfsgerecht an den jeweiligen Ausbringorganen bereitzustellen, wird das Spritzmittel für gewöhnlich anhand wenigstens einer der Spritzvorrichtung zugeordneten Fördereinrichtung, insbesondere Pumpeneinrichtung, entlang zumindest eines Flüssigkeitskreislaufs der Spritzvorrichtung, an dem die Ausbringorgane angeordnet bzw. mit dem die Ausbringorgane fluidleitend verbunden sind, gefördert.

Eine gattungsgemäße landwirtschaftliche Spritzvorrichtung und ein entsprechendes Verfahren zum Ausbringen von Spritzmittel sind beispielsweise auch aus den Druckschriften EP 2 153 710 A2 und EP 3 539 376 B1 bekannt. Eine entsprechende Fördermenge und/oder ein Förderdruck, mit welchen das Spritzmittel zumindest abschnittsweise entlang des Flüssigkeitskreislaufs gefördert wird, wird dabei auf der Basis wenigstens eines an der Fördereinrichtung einstellbaren Betriebsparameters, hier insbesondere anhand einer einstellbaren Drehzahl der Fördereinrichtung, eingestellt. Das derart bereitgestellte Spritzmittel wird dabei ferner über mehrere entlang des Flüssigkeitskreislaufs angeordnete Ausbringorgane auf die Nutzfläche ausgebracht.

Derartig betreibbare Spritzvorrichtungen und/oder Verfahren haben aber bisher den Nachteil, dass der wenigstens eine einstellbare Betriebsparameter, insbesondere die Drehzahl, der Fördereinrichtung stets, insbesondere nur, in Abhängigkeit wenigstens eines entlang des Flüssigkeitskreislaufs angeordneten Stellorgans, welches insbesondere nach Art eines zentralen Stellventils bzw. Mengenregelventils ausgebildet ist, und/oder in Abhängigkeit einer Fahrgeschwindigkeit der Spritzvorrichtung gesteuert und/oder geregelt wird. Eine derartige Steuerung und/oder Regelung des wenigstens einen Betriebsparameters der Fördereinrichtung hat sich in der Praxis jedoch als unzureichend erwiesen.

Die der Erfindung zugrunde liegende Aufgabe besteht somit darin, ein Verfahren zum Ausbringen von Spritzmittel so zu gestalten, dass die maschineninterne Förderung des Spritzmittels und/oder der Betrieb der wenigstens einen Fördereinrichtung weiter verbessert wird. Insbesondere soll ein Verfahren bereitgestellt werden, durch welches der wenigstens eine Betriebsparameter, vorzugsweise die Drehzahl, der Fördereinrichtung optimal geregelt wird.

Diese Aufgabe wird erfindungsgemäß dadurch gelöst, dass der wenigstens eine Betriebsparameter, insbesondere die Drehzahl, der Fördereinrichtung auf der Basis der einstellbaren Öffnungszeiten, insbesondere der Impulsdauer bzw. dem Duty-Cycle, der Ausbringorgane, und vorzugsweise zusätzlich auf der Basis der Fördermenge und/oder des Förderdrucks, gesteuert und/oder geregelt wird.

In Folge dieser Maßnahme wird der wenigstens eine Betriebsparamater, insbesondere die Drehzahl, der zumindest einen Fördereinrichtung variabel in Abhängigkeit der Einstellparameter, insbesondere der Öffnungszeiten bzw. Impulsdauern, der Ausbringorgane eingestellt. Bevorzugt werden dabei zusätzlich auch die innerhalb des Flüssigkeitskreislaufs einzustellenden Fördermengen und/oder die einzustellende Förderdrücke des Spritzmittels berücksichtigt. Der einzustellende Betriebsparamater, insbesondere die einzustellende Drehzahl, der zumindest einen Fördereinrichtung wird somit in Abhängigkeit wenigstens eines Einstellparameters der Ausbringorgane und bevorzugt zusätzlich auf der Basis wenigstens eines weiteren Parameters, wie beispielsweise die Fahrgeschwindigkeit der Spritzvorrichtung, einem Öffnungsgrad wenigstens eines Stellorgans, einer Fördermenge und/oder eines Förderdrucks des Spritzmittels bestimmt und/oder vorgegeben. Der wenigstens eine Betriebsparameter der Fördereinrichtung kann hierbei beispielsweise anhand einer elektronischen Funktion und/oder einem elektronisch Kennfeld hinterlegt und/oder abrufbar sein, welche den wenigstens einen Einstellparameter der Ausbringorgane und bevorzugt wenigstens einen weiteren einzustellenden Parameter berücksichtigten. Durch eine derartige Ausführungsform ist erreicht, dass die wenigstens eine Fördereinrichtung, insbesondere Pumpeneinrichtung, während der Ausbringung mit einem optimal abgestimmten Betriebsparameter, insbesondere mit optimaler Drehzahl, betrieben wird.

In einer bevorzugten Ausführungsform kann vorgesehen sein, dass als Fördermenge des Spritzmittels eine bestimmbare und/oder vorgebbare Soll-Durchflussmenge des Spritzmittels und/oder als Förderdruck des Spritzmittels ein bestimmbarer und/oder vorgebbarer Soll-Förderdruck bzw. Soll-Systemdruck des Spritzmittels berücksichtigt wird. In einer besonders bevorzugten Ausführungsform ist, insbesondere entlang des Flüssigkeitskreislaufs, wenigstens eine Messeinrichtung vorgesehen, welche dazu eingerichtet ist, eine Ist-Durchflussmenge und/oder einen Ist-Förderdruck bzw. Ist-Systemdruck des Spritzmittels zu erfassen, wobei die Ist-Durchflussmenge und/oder der Ist-Förderdruck zum Steuern und/oder Regeln des Betriebsparameters der Fördereinrichtung berücksichtigt wird.

Die Ausbringorgane sind vorzugsweise nach Art von, insbesondere schnell, schaltbaren Ventilen und/oder Spritzdüsen ausgebildet. Besonders bevorzugt sind die Ausbringorgane jedoch als Spritzdüsen ausgebildet, denen jeweils wenigstens ein Ventil zugeordnet ist, welches dazu eingerichtet ist, die Ausbringung des Spritzmittels über die jeweilige Spritzdüse freizugeben und/oder zu sperren, insbesondere zu regeln. Alternativ oder zusätzlich kann ein jeweiliges Ausbringorgan auch nach Art eines Mehrfachdüsenkörpers, mit jeweils mehreren je nach Bedarf zuschaltbaren Spritzdüsen, ausgebildet sein. Bei einem als Mehrfachdüsenkörper ausgebildeten Ausbringorgan kann mehreren oder allen Spritzdüsen gemeinsam oder alternativ bzw. zusätzlich jeder Spritzdüse einzeln wenigstens ein Ventil zugeordnet sein. Alternativ oder zusätzlich kann ein derartiges Ausbringorgan auch ein Ventil, beispielsweise nach Art eines Teilbreitenventils, sein, welches einer Gruppe einzelner Spritzdüsen oder einer Gruppe von Mehrfachdüsenkörpern zugeordnet und dazu eingerichtet ist, den Durchfluss des Spritzmittels zu den mehreren Spritzdüsen oder Mehrfachdüsenkörpern zu steuern und/oder zu regeln.

Die Ausbringorgane sind ferner bevorzugt über den Flüssigkeitskreislauf fluidleitend mit wenigstens einem zum Vorhalten des Spritzmittels vorgesehenen Vorratsbehälter der Spritzvorrichtung verbunden. Das Spritzmittel kann dabei in zumindest teilweise vorgemischter Form, beispielsweise aus wenigstens einer Chemikalie und einer Trägerflüssigkeit oder alternativ in separaten Vorratsbehältern vorgehalten werden, wobei die separat vorgehaltenen Flüssigkeiten (Chemikalie und Trägerflüssigkeit) in einstellbarer Weise entlang des Flüssigkeitskreislaufs zum Spritzmittel zusammengeführt bzw. vermischt werden.

Die Fördereinrichtung, insbesondere Pumpeneinrichtung, wird vorzugsweise mittels wenigstens einer zugeordneten Aktorik angetrieben. Die Aktorik kann dabei ein hydraulisch, pneumatisch und/oder elektrisch betriebener Motor sein, welcher an der Fördereinrichtung angeordnet und/oder mit der Fördereinrichtung verbunden ist. Alternativ oder zusätzlich kann die Pumpeneinrichtung auch mittels einer externen Aktorik, welche einer anderen Maschine bzw. Maschineneinrichtung, beispielsweise einer Zugmaschine, zugeordnet ist, antreibbar sein. Beispielsweise kann ein zwischen dem Zugfahrzeug und der Spritzvorrichtung ausgebildeter Zapfwellenantrieb vorgesehen sein, welche dazu eingerichtet ist, den jeweiligen Betriebsparameter, insbesondere die Drehzahl, der Fördereinrichtung variabel einzustellen. Darüber hinaus ist die wenigstens eine Fördereinrichtung vorzugsweise nach Art einer Flüssigkeitspumpe bzw. Spritzmittelpumpe, wie beispielsweise einer Kolbenmembranpumpe, Kreiselpumpe oder dergl., ausgebildet. Die wenigstens eine Fördereinrichtung ist ferner bevorzugt zwischen wenigstens einem Vorratsbehälter und den Ausbringorganen, insbesondere entlang des Flüssigkeitskreislaufs, angeordnet. Alternativ oder zusätzlich wären auch mehrere derartiger Fördereinrichtungen innerhalb der Spritzvorrichtung, insbesondere entlang des Flüssigkeitskreislaufs, denkbar.

In einer bevorzugten Ausführungsform des erfindungsgemäßen Verfahrens werden die Ausbringorgane nach Art einer Pulsweitenmodulation und/oder Pulsweitenfrequenzmodulation angesteuert und/oder geregelt. Die Ausbringorgane sind hierbei vorzugsweise nach Art sogenannter PWM-Düsen oder PWM-Ventile mit einstellbarer Pulsweite ausgebildet. Alternativ oder zusätzlich können die Ausbringorgane auch nach Art sogenannter PWFM-Düsen oder PWFM-Ventile mit zusätzlich einstellbarer Pulsfrequenz ausgebildet sein. Derartige Ausbringorgane sind dazu eingerichtet, die Fördermenge und/oder den Förderdruck, insbesondere die Ausbringmenge und/oder den Ausbringdruck an der Spritzdüse, anhand eines oder mehrerer vorgebbarer Duty-Cycle zu regeln und/oder einzustellen. Insbesondere sind derartig ausgebildete Ausbringorgane dazu eingerichtet, die Fördermenge und/oder die Ausbringmenge anhand der einstellbaren Pulsweite und den Förderdruck und/oder Ausbringdruck anhand der einstellbaren Pulsfrequenz zu steuern und/oder zu regeln. Bei einer derartigen Ausführungsform kann besonders bevorzugt vorgesehen sein, dass der wenigstens eine Betriebsparameter, insbesondere die Drehzahl, der Fördereinrichtung anhand der eingestellten Duty-Cycle, insbesondere anhand der Pulsweite und/oder Pulsfrequenz, der Ausbringorgane vorgegeben und/oder eingestellt wird. Somit ist hierbei vorgesehen, dass der wenigstens eine Betriebsparameter, insbesondere die Drehzahl, anhand der Duty-Cycle der Ausbringorgane variiert wird.

In einer Weiterbildung des erfindungsgemäßen Verfahrens wird der wenigstens eine Betriebsparameter, insbesondere die Drehzahl, der Fördereinrichtung auf einen von mehreren, insbesondere bestimmbaren und/oder abrufbaren, definierten Betriebspunkte, insbesondere definierte Drehzahlen, eingestellt. Die definierten Betriebspunkte, insbesondere die definierten Drehzahlen, sind dabei jeweils unterschiedlichen Öffnungszeiten, insbesondere Impulsdauern bzw. Duty-Cycle, zugeordnet. Bevorzugt sind die definierten Betriebspunkte, insbesondere Drehzahlen, dabei zusätzlich unterschiedlichen Fördermengen und/oder Förderdrücken zugeordnet. Die unterschiedlichen Betriebspunkte, insbesondere Drehzahlen, werden hierbei vorzugsweise anhand elektronisch hinterlegter Funktionskurven und/oder Kennfeldern abgerufen und/oder bestimmt bzw. berechnet. Jeder einstellbaren Öffnungszeit bzw. jedem Duty-Cycle der Ausbringorgane und vorzugsweise jeder Fördermenge und/oder jedem Förderdruck ist vorzugsweise wenigstens ein optimaler Betriebspunkt, insbesondere wenigstens eine optimale Drehzahl zugeordnet. Alternativ oder zusätzlich kann auch vorgesehen sein, dass unterschiedlichen, insbesondere nah beieinander liegenden, Öffnungszeiten bzw. Duty-Cycle ein gemeinsamer Betriebspunkt, insbesondere eine gemeinsame Drehzahl, zugeordnet ist.

In einer anderen bevorzugten Ausführungsform des erfindungsgemäßen Verfahrens wird der wenigstens eine Betriebsparameter, insbesondere die Drehzahl, der Fördereinrichtung innerhalb von, vorzugsweise vorgebbarer und/oder variabler, Grenzwerte gesteuert und/oder geregelt. Die Grenzwerte werden dabei vorzugsweise in Abhängigkeit der Öffnungszeiten, insbesondere Impulsdauern bzw. Duty-Cycle, der Fördermenge und/oder des Förderdrucks angepasst. Die Grenzwerte können dabei beispielsweise elektronisch hinterlegt und/oder manuell vorgegeben und/oder angepasst werden. Insbesondere kann hierbei auch vorgesehen sein, dass bei einem Über- bzw. Unterschreiten der Grenzwerte durch den wenigstens einen Betriebsparameter, insbesondere der Drehzahl, die jeweiligen Öffnungszeiten, die Fördermengen und/oder Förderdrücke derart angepasst werden, dass der wenigstens eine Betriebsparameter, insbesondere die Drehzahl, der Fördereinrichtung in Richtung der Grenzwerte korrigiert bzw. verändert wird. Derartige Grenzwerte können Beispielsweise eine maximale oder minimale Drehzahl der Pumpeneinrichtung sein.

In einer besonders bevorzugten Weiterbildung des erfindungsgemäßen Verfahrens werden wenigstens ein zum Anpassen der Fördermenge vorgesehenes Stellorgan, insbesondere Mengenregelventil, und/oder die Ausbringorgane, welche zum Anpassen des Förderdrucks vorgesehen sind, derart eingestellt und/oder angepasst, dass sich der wenigstens eine Betriebsparameter, insbesondere die Drehzahl, der Fördereinrichtung auf einen der mehreren, insbesondere bestimmbaren und/oder abrufbaren, definierten Betriebspunkte, insbesondere Drehzahlen, einstellt. Ist ein definierter Betriebspunkt, insbesondere eine definierte Drehzahl, in einer bestimmten Situation während der Ausbringung, beispielsweise aufgrund der Fahrgeschwindigkeit der Spritzvorrichtung, nicht ohne weiteres zu erreichen, kann insbesondere vorgesehen sein, dass entweder das wenigstes eine Stellorgan oder die Ausbringorgane derart eingestellt und/oder angepasst werden, dass die definierten Betriebspunkte, insbesondere Drehzahlen, erreicht werden. Alternativ oder zusätzlich kann auch vorgesehen sein, dass das wenigstens eine Stellorgan und die Ausbringorgane gemeinsam derart eingestellt und/oder angepasst werden, dass die definierten Betriebspunkte, insbesondere Drehzahlen, erreicht werden. Ferner kann auch alternativ oder zusätzlich vorgesehen sein, dass die Fahrtgeschwindigkeit der Spritzvorrichtung, beispielsweise mittels Tractor-Implement-Management" (TIM) Protokoll, derart verringert oder erhöht wird, dass die definierten Betriebspunkte, insbesondere Drehzahlen, erreicht werden. Wenigstens eine der optimalen Betriebspunkte bzw. Drehzahlen kann alternativ oder zusätzlich auch ein Betriebspunkt bzw. eine Drehzahl sein, bei dem die Fördereinrichtung einen besonders hohen Wirkungsgrad aufweist oder welcher hinsichtlich von Verschleiß und damit der Standzeit (Lebensdauer) und/oder dem Energiebedarf der Fördereinrichtung besonders vorteilhaft ist.

Die der Erfindung zugrundeliegende Aufgabe wird ferner durch eine landwirtschaftliche Spritzvorrichtung, insbesondere Feldspritze, mit wenigstens einem zugeordneten Steuer- und/oder Regelsystem, der eingangs genannten Art gelöst, wobei die Spritzvorrichtung mit dem zugeordneten Steuer- und/oder Regelsystem dazu eingerichtet ist, das erfindungsgemäße Verfahren nach einer der vorstehend beschriebenen Ausführungsformen auszuführen. Hinsichtlich der Vorteile und Modifikationen der erfindungsgemäßen Spritzvorrichtung wird somit auf die Vorteile und Modifikationen des erfindungsgemäßen Verfahrens verwiesen.

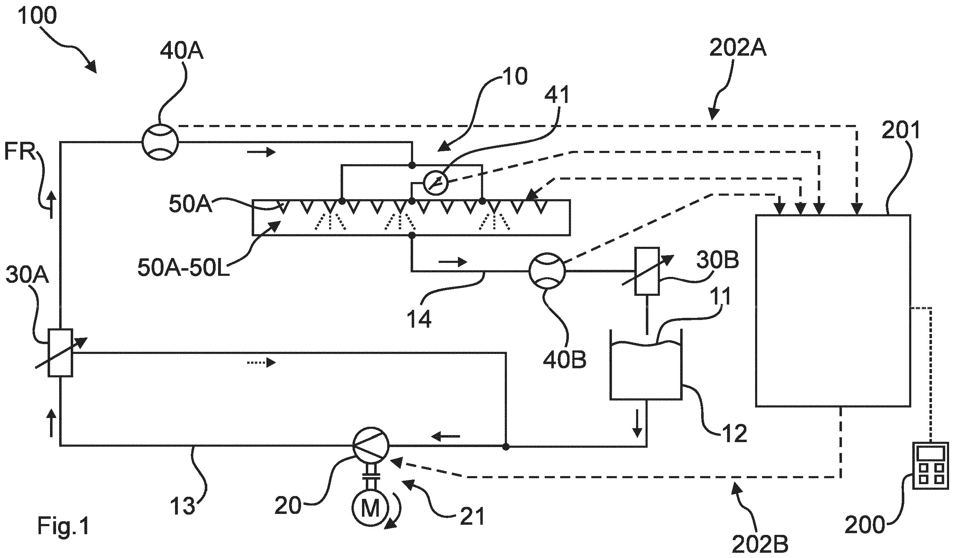

Weitere Einzelheiten der Erfindung sind der Beispielsbeschreibung und den Zeichnungen zu entnehmen. Die Zeichnungen zeigen
- Fig.1: ein Flüssigkeitsplan einer landwirtschaftlichen Spritzvorrichtung zum Ausführen eines erfindungsgemäßen Verfahrens in schematischer Darstellung.

Ein beispielhafter Aufbau einer als Feldspritze ausgeführten landwirtschaftlichen Spritzvorrichtung 100, welche zum Ausbringen eines Spritzmittels auf eine landwirtschaftliche Nutzfläche vorgesehen ist, ist in der Fig.1 gezeigt. Hierbei sei explizit erwähnt, dass die Spritzvorrichtung 100 alternativ dazu auch innerhalb einer landwirtschaftlichen Verteilmaschine, wie beispielsweise einer Sämaschine, einer Bodenbearbeitungsmaschine oder einer Pflanzenbehandlungsmaschine, wie beispielsweise einer Hacke, integriert sein kann.

Die Spritzvorrichtung 100 umfasst hierbei wenigstens einen Flüssigkeitskreislauf 10, in den zumindest ein zum Vorhalten des auszubringenden Spritzmittels 11 vorgesehener Vorratsbehälter 12 integriert ist. Das Spritzmittel 11 wird dabei anhand wenigstens einer als Pumpeneinrichtung ausgebildeten Fördereinrichtung 20 entlang spritzmittelleitender Flüssigkeitsleitungen 13, 14, welche insbesondere in wenigstens eine Vorlauf- und Rücklaufleitung unterteilt sind, gefördert. Die hier dargestellte Fördereinrichtung 20 ist über eine Saugseite mit dem wenigstens einen Vorratsbehälter 12 verbunden und dazu eingerichtet, das Spritzmittel 11 aus dem Vorratsbehälter 12 anzusaugen und in einstellbarer Weise entlang des Flüssigkeitskreislaufs 10 zu fördern. Das Spritzmittel 11 wird dabei auf der Basis wenigstens eines an der Fördereinrichtung 20 einstellbaren Betriebsparameters, vorzugsweise einer einstellbaren Drehzahl der Fördereinrichtung 20, derart gefördert, dass zumindest abschnittsweise eine definierte Fördermenge und/oder ein definierter Förderdruck eingestellt wird.

Neben der beispielhaft dargestellten Ausführungsvariante sind ferner auch erfindungsgemäße Ausführungsformen denkbar, bei der die Spritzvorrichtung 100 alternativ oder zusätzlich wenigstens eine weitere Fördereinrichtungen zum Fördern des Spritzmittels 11 umfasst. Die wenigstens eine weitere, insbesondere als Pumpeneinrichtung ausgebildete, Fördereinrichtung kann dabei ebenfalls entlang des wenigstens eine Flüssigkeitskreislaufs 10 angeordnet und/oder mit dem wenigstens einen Vorratsbehälter 12 verbunden sein. Weiterhin wäre auch denkbar, dass die wenigstens eine weitere Fördereinrichtung alternativ oder zusätzlich wenigstens einem weiteren bzw. anderen Flüssigkeitskreislauf der Spritzborrichtung 100 zugeordnet ist. Wenigstens eine Fördereinrichtung kann alternativ oder zusätzlich auch mit einem in diesem Ausführungsbeispiel ebenfalls nicht gezeigten Wirkstoffförderpfad, z.B. nach Art einer sogenannten Direkteinspeisung, verbunden sein. Insbesondere ist hierbei vorgesehen, dass die Fördereinrichtung nach Art von Kolbenmembran- oder Kreiselpumpen ausgeführt ist.

Wie ebenfalls in der Fig.1 zu erkennen ist, wird die Fördermenge oder alternativ bzw. zusätzlich der Förderdruck über optionale Stellorgane 30A, 30B, welche nach Art von Mengenregelventilen bzw. Proportional-Stellventilen ausgebildet sind, angepasst und/oder beeinflusst. Insbesondere ist dabei vorgesehen, dass die Fördermenge oder alternativ bzw. zusätzlich der Förderdruck anhand eines einstellbaren Öffnungsgrads der Stellorgane 30A, 30B variiert werden kann. Wenigstens eines der häufig als zentrale Mengenregelventile bezeichneten Stellorgane 30A, 30B ist hierbei innerhalb der Vorlaufleitung 13 angeordnet, während das wenigstens eine andere Stellorgan 30B innerhalb der Rücklaufleitung 14 angeordnet ist. Die Stellorgane 30A, 30B können selbstverständlich auch an anderen Positionen des Flüssigkeitskreislaufs 10 angeordnet sein. Ferner ist auch eine alternative Ausführungsform mit nur einem Stellorgan 30A, 30B denkbar.

Weiterhin sind entlang des Flüssigkeitskreislaufs 100 optionale Messeinrichtungen, bestehend aus Volumenstrommessern 40A, 40B und einem Drucksensoren 41, angeordnet. Die jeweiligen Messeinrichtungen sind dazu eingerichtet, entweder die Fördermenge oder den Förderdruck des Spritzmittels 11 zu erfassen und/oder zu bestimmen. Alternativ oder zusätzlich dazu wäre auch wenigstens eine optionale Messeinrichtung denkbar, welche dazu eingerichtet ist, sowohl die Fördermenge als auch den Förderdruck des Spritzmittels gemeinsam zu erfassen und/oder zu bestimmen. Wenigstens einer der dargestellten Volumenstrommesser 40A, 40B ist innerhalb der Vorlaufleitung 13 des Flüssigkeitskreislauf 10 angeordnet, während der jeweils andere Volumenstrommesser 40b entlang der Rücklaufleitung 14 des Flüssigkeitskreislaufs 10 angeordnet ist. Es wäre alternativ oder zusätzlich dazu auch eine Ausführungsvariante mit nur einem oder mit mehr als zwei Volumenstrommessern denkbar.

Das Spritzmittel 11 wird hierbei über mehrere entlang des Flüssigkeitskreislaufs 100 angeordnete Ausbringorgane 50A-50L auf die Nutzfläche ausgebracht bzw. appliziert. Die Ausbringorgane 50A-50L sind hierbei nach Art von Spritzdüsen und/oder Spritzdüsenventilen ausgebildet und in einer angedeuteten Förderrichtung FR des Spritzmittels 11 hinter der Fördereinrichtung 30, insbesondere zwischen Vor- und Rücklaufleitung 13, 14, angeordnet. Darüber hinaus sind die Ausbringorgane 50A-50L jeweils dazu eingerichtet, eine, insbesondere bedarfsgerechte und/oder ortspezifische, Ausbringmenge des Spritzmittels 11 anhand von an den Ausbringorganen 50A-50L einstellbaren Öffnungszeiten einzustellen. Die notwendigen bzw. bedarfsgerechten Ausbringmengen können hierbei beispielsweise teilflächen- und/oder punktspezifisch anhand einer sogenannten elektronisch hinterlegten Applikationskarte oder dergl. abrufbar sein.

Des Weiteren sei hierbei explizit erwähnt, dass die abgebildeten Ausbringorgane 50A-50L in diesem Ausführungsbeispiel insbesondere nach Art schnellschaltender und häufig als PWM oder PWFM-Düsen bzw. -Ventilen bezeichneter Spritzdüsen bzw. Düsenventile ausgebildet sind. Die Ausbringorgane 50A-50L können dabei zumindest teilbreite- bzw. gruppenweise oder einzeln anhand von Pulsweitenmodulation und/oder Pulsweitenfrequenzmodulation und damit mittels eines einstellbaren Duty-Cycles angesteuert und/oder geregelt werden. Für gewöhnlich sind derartige Ausbringorgane 50A-50L an einem der Spritzvorrichtung 100 zugeordneten und dabei häufig pendelnd gelagerten Spritzgestänge angeordnet.

Wie außerdem anhand des beispielhaft dargestellten Flüssigkeitsplans zu erkennen ist, wird nicht ausgebrachtes bzw. überschüssiges Spritzmittel 11 über die optionale Rücklaufleitung 14 zurück zum Vorratsbehälter 12 gefördert.

Zur Förderung des Spritzmittels 11 ist erfindungsgemäß vorgesehen, dass wenigstens ein Betriebsparameter, insbesondere die Drehzahl, der Fördereinrichtung 20 auf der Basis der einstellbaren Öffnungszeiten, insbesondere der Impulsdauer bzw. dem Duty-Cycle, der Ausbringorgane 50A-50L gesteuert und/oder geregelt wird.

Hierfür ist insbesondere eine elektronische Recheneinheit 201 vorgesehen, welche Bestandteil eines der Spritzvorrichtung 100 zugeordneten Steuer- und/oder Regelsystems 200 ist. Die Recheneinheit 201 ist hier über schematisch angedeutete Signalleitungen 202A, 202B daten- bzw. signalübertragend mit den Ausbringorganen 50A-50L und der Fördereinrichtung 20 verbunden. Die Signalleitungen 202A, 202B können hierbei zumindest teilweise kabelgebunden und/oder kabellos ausgeführt sein. Somit werde zur Bestimmung und/oder Einstellung des wenigstens einen Betriebsparameter, insbesondere der Drehzahl, der Fördereinrichtung 20 die Öffnungszeiten bzw. der Duty-Cycle der Ausbringorgane 50A-50L an die Recheneinheit 201 übertragen.

Des Weiteren ist optional vorgesehen, dass der wenigstens eine Betriebsparameter der Fördereinrichtung 20 zusätzlich auch auf der Basis der Fördermenge und/oder des Förderdrucks, gesteuert und/oder geregelt wird. Die elektronisch Recheneinheit 201 ist hierfür optional über Signalleitungen 202A mit den Messeinrichtungen, insbesondere wenigstens einem Volumenstrommesser 50A, 50B und/oder einem Drucksensoren 41, verbunden. Es wäre auch denkbar, dass der Fördereinrichtung 20, den Ausbringorganen 50A-50L, und/oder den Messeinrichtungen alternativ oder zusätzlich jeweils wenigstens eine eigene elektronische Recheneinheit zugeordnet ist.

Der wenigstens eine Betriebsparameter der Fördereinrichtung 20 ist nachfolgend ausschließlich als Drehzahl der als Pumpeneinrichtung ausgebildeten Fördereinrichtung 20 definiert, wobei alternativ oder zusätzlich dazu auch andere Betriebsparameter, wie beispielsweise eine elektrische Spannung, Stromstärke oder dergleichen, denkbar wäre. Die Fördereinrichtung 20 wird mittels wenigstens einer zugeordneten Aktorik 21 angetrieben, welche dazu eingerichtet ist, die Drehzahl der Fördereinrichtung 20 variabel einzustellen. Die Aktorik 21 kann beispielsweise nach Art eines hydraulisch, pneumatisch und/oder elektrisch betriebenen Motors ausgebildet sein. Der Motor 21 kann dabei auch ein separater Pumpenmotor oder Pumpenantrieb sein. Alternativ oder zusätzlich kann die Fördereinrichtung 20 auch mittels eines Zapfwellenantriebs einer der Spritzvorrichtung 100 zugeordneten Zugmaschine betreibbar sein.

Des Weiteren ist vorgesehen, dass die Drehzahl der Fördereinrichtung 20 auf eine von mehreren, insbesondere bestimmbaren und/oder abrufbaren, definierten Drehzahlen eingestellt wird. Die definierten Drehzahlen sind dabei unterschiedlichen Öffnungszeiten bzw. Duty-Cycle und optional zusätzlich unterschiedlichen Fördermengen und/oder Förderdrücken zugeordnet. Die definierten Drehzahlen der Fördereinrichtung können dabei beispielsweise anhand von elektronisch hinterlegten und/oder abrufbaren Funktionskurven oder Kennfeldern bestimmt werden, welche insbesondere einen Zusammenhang zwischen den Drehzahlen und Öffnungszeiten bzw. Duty-Cycle definieren. Zusätzlich zu den Öffnungszeiten bzw. Duty-Cycle kann auch ein Zusammenhang zwischen den Drehzahlen und der Fördermengen und/oder der Förderdrücke anhand der Funktionskurven oder Kennfeldern definiert sein. Mit anderen Worten wird die notwendige einzustellende Drehzahl der Fördereinrichtung 20 in direkter Weise anhand der Öffnungszeiten bzw. Duty-Cycle der Ausbringorgane 50A-50L bestimmt. Bei dem Duty-Cycle kann es sich je nach Ausführungsform um einen global für alle Ausbringorgane 50A-50L vorgegeben Duty-Cycle oder einen Mittelwert der Duty-Cycle mehrerer oder aller Ausbringorgane 50A-50L handeln.

In einer alternativ oder zusätzlich Ausführungsform kann auch vorgesehen sein, dass die Drehzahl der Fördereinrichtung 20 innerhalb von, insbesondere vorgebbarer und/oder variabler, Grenzwerte gesteuert und/oder geregelt wird. Die Grenzwerte werden dabei in Abhängigkeit der Öffnungszeiten bzw. Duty-Cycle, der Fördermenge und/oder des Förderdrucks vorgegeben und/oder variiert. Beispielsweise kann für einen bestimmten Duty-Cycle, von z.B. 80%, oder einen Bereich von Duty-Cycle, von z.B. 50% bis 80%, ein Bereich unterschiedlicher zulässiger Drehzahlen der Fördereinrichtung 20 vorgegeben werden.

In einer alternativen Ausführungsform, welche in der Figur nicht gezeigt ist, wäre es durchaus denkbar, dass bei der Bestimmung und/oder Einstellung der Drehzahl wenigstens ein Stellorgan 30A, 30B, insbesondere der Öffnungsgrad des Stellorgans 30A, 30B, und/oder eine Fahrgeschwindigkeit der Spritzvorrichtung 100 berücksichtigt wird.

### Bezugszeichenliste

- 10: Flüssigkeitskreislauf
- 11: Spritzmittel
- 12: Vorratsbehälter
- 13: Flüssigkeitsleitung, Vorlaufleitung
- 14: Flüssigkeitsleitung, Rücklaufleitung
- 20: Fördereinrichtung
- 21: Aktorik
- 100: Spritzvorrichtung
- 30A, 30B: Stellorgan, Mengenregelventil
- 40A, 40B: Messeinrichtung, Volumenstrommesser
- 41: Messeinrichtung, Drucksensor
- 50A-50L: Ausbringorgane
- 200: Steuer- und/oder Regelsystem
- 201: Recheneinheit
- 202A, 202B: Signalleitungen

## Patentansprüche

1. Verfahren zum Ausbringen von Spritzmittel (11) auf eine landwirtschaftliche Nutzfläche mittels einer landwirtschaftlichen Spritzvorrichtung (100), insbesondere Feldspritze, mit den Schritten:
- Fördern des Spritzmittels (11) mittels wenigstens einer Fördereinrichtung (20), insbesondere Pumpeneinrichtung, entlang wenigstens eines Flüssigkeitskreislaufs (10) der Spritzvorrichtung (100), wobei eine Fördermenge und/oder ein Förderdruck, mit welchem das Spritzmittel (11) zumindest abschnittsweise entlang des Flüssigkeitskreislaufs (10) gefördert wird, auf der Basis wenigstens eines an der Fördereinrichtung (20) einstellbaren Betriebsparameters, vorzugsweise einer einstellbaren Drehzahl der Fördereinrichtung (20), eingestellt wird; und
- Ausbringen des Spritzmittels (11) auf die Nutzfläche über mehrere entlang des Flüssigkeitskreislaufs (10) angeordnete Ausbringorgane (50A-50L), welche jeweils dazu eingerichtet sind, eine, vorzugsweise bedarfsgerechte und/oder ortspezifische, Ausbringmenge des Spritzmittels (11) anhand von an den Ausbringorganen (50A-50L) einstellbaren Öffnungszeiten, insbesondere einer Impulsdauer bzw. einem Duty-Cycle, einzustellen,
**dadurch gekennzeichnet, dass** der wenigstens eine Betriebsparameter, insbesondere die Drehzahl, der Fördereinrichtung (20) auf der Basis der einstellbaren Öffnungszeiten, insbesondere der Impulsdauer bzw. dem Duty-Cycle, der Ausbringorgane (50A-50L), und vorzugsweise zusätzlich auf der Basis der Fördermenge und/oder des Förderdrucks, gesteuert und/oder geregelt wird.

2. Verfahren nach Anspruch 1, **dadurch gekennzeichnet, dass** die Ausbringorgane (50A-50L) nach Art einer Pulsweitenmodulation und/oder Pulsweitenfrequenzmodulation angesteuert und/oder geregelt werden.

3. Verfahren nach zumindest einem der vorgenannten Ansprüche 1 und 2, **dadurch gekennzeichnet, dass** der wenigstens eine Betriebsparameter, insbesondere die Drehzahl, der Fördereinrichtung (20) auf einen von mehreren, insbesondere bestimmbaren und/oder abrufbaren, definierten Betriebspunkte, insbesondere definierte Drehzahlen, eingestellt wird, wobei die definierten Betriebspunkte, insbesondere die definierten Drehzahlen, jeweils unterschiedlichen Öffnungszeiten, insbesondere Impulsdauern bzw. Duty-Cycle, und vorzugsweise zusätzlich unterschiedlichen Fördermengen und/oder Förderdrücken, zugeordnet sind.

4. Verfahren nach zumindest einem der vorgenannten Ansprüche 1 bis 3, **dadurch gekennzeichnet, dass** der wenigstens eine Betriebsparameter, insbesondere die Drehzahl, der Fördereinrichtung (20) innerhalb von, vorzugsweise vorgebbaren und/oder variablen, Grenzwerten gesteuert und/oder geregelt wird, wobei die Grenzwerte vorzugsweise in Abhängigkeit der Öffnungszeiten, insbesondere Impulsdauern bzw. Duty-Cycle, der Fördermenge und/oder des Förderdrucks angepasst werden.

5. Verfahren nach zumindest einem der vorgenannten Ansprüche 3 bis 4, **dadurch gekennzeichnet, dass** wenigstens ein zum Anpassen der Fördermenge vorgesehenes Stellorgan (30A, 30B), insbesondere Mengenregelventil, und/oder die Ausbringorgane (50A-50L), welche zum Anpassen des Förderdrucks vorgesehen sind, derart eingestellt werden, dass sich der wenigstens eine Betriebsparameter, insbesondere die Drehzahl, der Fördereinrichtung (20) auf einen der mehreren, insbesondere bestimmbaren und/oder abrufbaren, definierten Betriebspunkte, insbesondere definierten Drehzahlen, einstellt.

6. Landwirtschaftliche Spritzvorrichtung (100), insbesondere Feldspritze, mit wenigstens einem zugeordneten Steuer- und/oder Regelsystem (200), die landwirtschaftliche Spritzvorrichtung umfassend:
- einen Flüssigkeitskreislauf,
- eine Fördereinrichtung, welche dazu eingerichtet ist, die Spritzmittel entlang des Flüssigkeitskreislaufs zu fördern,
- entlang des Flüssigkeitskreislaufs angeordnete Ausbringorgane, welche jeweils dazu eingerichtet sind, eine Ausbringmenge des Spritzmittels anhand von an den Ausbringorganen einstellbaren Öffnungszeiten einzustellen,
**dadurch gekennzeichnet, dass** die Spritzvorrichtung (100) mit dem zugeordneten Steuer- und/oder Regelsystem (200) dazu eingerichtet ist, das Verfahren zum Ausbringen von Spritzmittel (11) auf eine landwirtschaftliche Nutzfläche nach einem der Ansprüche 1 bis 5 auszuführen.

## Claims

1. Method for applying spraying agent (11) on an agricultural area by means of an agricultural spraying device (100), in particular field sprayer, comprising the steps of:
- conveying the spraying agent (11) by means of at least one conveying device (20), in particular pump device, along at least one liquid circuit (10) of the spraying device (100), a delivery rate and/or a delivery pressure, with which the spraying agent (11) is conveyed at least in portions along the liquid circuit (10), being adjusted on the basis of at least one operating parameter adjustable on the conveying device (20), preferably an adjustable rotational speed of the conveying device (20); and
- applying the spraying agent (11) on the area via a plurality of application members (50A-50L) arranged along the liquid circuit (10), each of which is designed to adjust an application quantity of the spraying agent (11), preferably as required and/or site-specific, on the basis of opening times adjustable on the application members (50A-50L), in particular a pulse duration or a duty cycle,
**characterized in that** the at least one operating parameter, in particular the rotational speed, of the conveying device (20) is open-loop and/or closed-loop controlled on the basis of the adjustable opening times, in particular the pulse duration or the duty cycle, of the application members (50A-50L), and preferably additionally on the basis of the delivery rate and/or the delivery pressure.

2. Method according to claim 1, **characterized in that** the application members (50A-50L) are open-loop and/or closed-loop controlled by pulse width modulation and/or pulse width frequency modulation.

3. Method according to at least one of the preceding claims 1 and 2, **characterized in that** the at least one operating parameter, in particular the rotational speed, of the conveying device (20) is adjusted to one of a plurality of, in particular determinable and/or retrievable, defined operating points, in particular defined rotational speeds, the defined operating points, in particular the defined rotational speeds, each being assigned to different opening times, in particular pulse durations or duty cycles, and preferably additionally to different delivery rates and/or delivery pressures.

4. Method according to at least one of the preceding claims 1 to 3, **characterized in that** the at least one operating parameter, in particular the rotational speed, of the conveying device (20) is open-loop and/or closed-loop controlled within, preferably predefinable and/or variable, limit values, the limit values preferably being adapted depending on the opening times, in particular pulse durations or duty cycle, the delivery quantity and/or the delivery pressure.

5. Method according to at least one of the preceding claims 3 to 4, **characterized in that** at least one actuating member (30A, 30B), in particular flow control valve, provided for adapting the delivery rate, and/or the application members (50A-50L) which are provided for adapting the delivery pressure, are adjusted such that the at least one operating parameter, in particular the rotational speed, of the conveying device (20) is adjusted to one of the plurality of, in particular determinable and/or retrievable, defined operating points, in particular defined rotational speeds.

6. Agricultural spraying device (100), in particular field sprayer, comprising at least one assigned open-loop and/or closed-loop control system (200), the agricultural spraying device comprising:
- a liquid circuit,
- a conveying device designed to convey the spraying agents along the liquid circuit,
- application members which are arranged along the liquid circuit and are each designed to adjust an application rate of the spraying agent on the basis of opening times adjustable on the application members,
**characterized in that** the spraying device (100) having the assigned open-loop and/or closed-loop control system (200) is designed to carry out the method for applying spraying agent (11) on an agricultural area according to any of claims 1 to 5.

## Revendications

1. Procédé pour l'épandage de produit de pulvérisation (11) sur une surface agricole utile au moyen d'un dispositif de pulvérisation agricole (100), en particulier d'un pulvérisateur agricole, comportant les étapes consistant à :
- transporter le produit de pulvérisation (11) au moyen d'au moins un appareil de transport (20), en particulier un appareil de pompage, le long d'au moins un circuit de liquide (10) du dispositif de pulvérisation (100), dans lequel un débit de transport et/ou une pression de transport, avec lesquels le produit de pulvérisation (11) est transporté au moins dans certaines sections le long du circuit de liquide (10), sont réglés sur la base d'au moins un paramètre de fonctionnement réglable sur l'appareil de transport (20), de préférence d'une vitesse de rotation réglable de l'appareil de transport (20) ; et
- épandre le produit de pulvérisation (11) sur la surface utile par l'intermédiaire de plusieurs organes d'épandage (50A-50L) disposés le long du circuit de liquide (10), lesquels sont respectivement configurés pour régler une quantité d'épandage, de préférence adaptée aux besoins et/ou spécifique au lieu, du produit de pulvérisation (11) à l'aide de temps d'ouverture réglables sur les organes d'épandage (50A-50L), en particulier d'une durée d'impulsion ou d'un cycle de service,
**caractérisé en ce que** l'au moins un paramètre de fonctionnement, en particulier la vitesse de rotation, de l'appareil de transport (20) est commandé et/ou régulé sur la base des temps d'ouverture réglables, en particulier de la durée d'impulsion ou du cycle de service, des organes d'épandage (50A-50L), et de préférence en outre sur la base du débit de transport et/ou de la pression de transport.

2. Procédé selon la revendication 1, **caractérisé en ce que** les organes d'épandage (50A-50L) sont commandés et/ou régulés à la manière d'une modulation de largeur d'impulsion et/ou d'une modulation de fréquence de largeur d'impulsion.

3. Procédé selon au moins l'une des revendications précédentes 1 et 2, **caractérisé en ce que** l'au moins un paramètre de fonctionnement, en particulier la vitesse de rotation, de l'appareil de transport (20) est réglé sur l'un parmi plusieurs points de fonctionnement définis, en particulier déterminables et/ou appelables, en particulier des vitesses de rotation définies, dans lequel les points de fonctionnement définis, en particulier les vitesses de rotation définies, sont respectivement associés à des temps d'ouverture différents, en particulier des durées d'impulsion ou des cycles de service, et de préférence en outre à des débits de transport et/ou des pressions de transport différents.

4. Procédé selon au moins l'une des revendications précédentes 1 à 3, **caractérisé en ce que** l'au moins un paramètre de fonctionnement, en particulier la vitesse de rotation, de l'appareil de transport (20) est commandé et/ou régulé à l'intérieur de valeurs limites, de préférence pouvant être prédéfinies et/ou variables, dans lequel les valeurs limites sont de préférence adaptées en fonction des temps d'ouverture, en particulier des durées d'impulsion ou des cycles de service, du débit de transport et/ou de la pression de transport.

5. Procédé selon au moins l'une des revendications précédentes 3 à 4, **caractérisé en ce qu'**au moins un organe de réglage (30A, 30B) prévu pour adapter le débit de transport, en particulier une soupape de régulation de débit, et/ou les organes d'épandage (50A-50L) qui sont prévus pour adapter la pression de transport, sont réglés de telle sorte que l'au moins un paramètre de fonctionnement, en particulier la vitesse de rotation, de l'appareil de transport (20) se règle sur l'un des points de fonctionnement définis, en particulier déterminables et/ou appelables, en particulier des vitesses de rotation définies.

6. Dispositif de pulvérisation agricole (100), en particulier pulvérisateur agricole, comportant au moins un système de commande et/ou de régulation (200) associé, le dispositif de pulvérisation agricole comprenant :
- un circuit de liquide,
- un appareil de transport, lequel est configuré pour transporter le produit de pulvérisation le long du circuit de liquide,
- des organes d'épandage disposés le long du circuit de liquide, lesquels sont respectivement configurés pour régler une quantité d'épandage du produit de pulvérisation à l'aide de temps d'ouverture réglables sur les organes d'épandage,
**caractérisé en ce que** le dispositif de pulvérisation (100) comportant le système de commande et/ou de régulation (200) associé est configuré pour mettre en œuvre le procédé pour l'épandage de produit de pulvérisation (11) sur une surface agricole utile selon l'une des revendications 1 à 5.
